# EUROPÄISCHE PATENTSCHRIFT

(11) **EP 1 845 014 B1**
(45) Veröffentlichungstag und Bekanntmachung des Hinweises auf die Patenterteilung: **15.10.2008**
(21) Anmeldenummer: 07007071.9
(22) Anmeldetag: 04.04.2007
(51) Int. Cl.: B62D 33/063, E02F 9/16

(54) **Baumaschine mit Gelenk-Fahrgestell**
Construction machine with articulated chassis
Engin avec châssis d'articulation

(30) Priorität: 13.04.2006 DE 102006017516
(43) Veröffentlichungstag der Anmeldung: 17.10.2007
(73) Patentinhaber: BOMAG GmbH, 56154 Boppard (DE)
(72) Erfinder: Heusinger, Jürgen, 56072 Koblenz (DE)
(74) Vertreter: Lang, Friedrich

(56) Entgegenhaltungen:
- EP-A- 0 233 367
- EP-A- 1 029 982
- DE-A1- 3 921 875
- US-A- 3 746 101
- US-A- 5 618 156
- US-A- 6 065 799

## Beschreibung

Die vorliegende Erfindung betrifft eine Baumaschine, bei der ein Motorträger über ein Gelenk mit einem Werkzeugträger zu einem Gelenk-Fahrgestell verbunden ist. Dabei weist der Motorträger wenigstens eine erste Fahrwerksachse und einen Motor zum Fahrantrieb der Baumaschine auf, während der Werkzeugträger wenigstens eine zweite Fahrwerksachse aufweist. Solche gattungsgemäßen Baumaschinen haben zudem eine Fahrerkabine, die zwischen Motor und Werkzeugträger angeordnet ist und einen Steuerstand zur Steuerung der Maschine beinhalten.

Bei diesen bekannten Baumaschinen handelt es sich insbesondere um sogenannte Bodenstabilisierer die zum Zerkleinern und Einmischen von Bindemitteln in anstehendes Bodenmaterial eingesetzt werden. Dazu ist am Werkzeugträger eine Fräse mit wenigstens einem rotierenden Rotor, der eine Vielzahl von Fräsmeißeln aufweist, als Werkzeug angebracht. Auch werden diese Baumaschinen als Recycler eingesetzt bzw. bezeichnet, da mit ihnen zum Beispiel im Straßenbau beschädigte Schwarzdecken aufgerissen, zerkleinert und diesem so erzeugten Granulat neue Bindemittel eingemischt werden können.

Allerdings kann es sich bei den gattungsgemäßen Baumaschinen auch um sogenannte "Scraper" oder "Schürfzüge" handeln, bei denen am Werkzeugträger ein Kübel mit einer bodenseitigen Klinge und dahinterliegenden Öffnung am Geräteträger als Werkzeug angebracht sind. Diese Kübel werden mit der Klinge voraus über'den anstehenden Boden gezogen und schürfen dabei eine dünne Bodenschicht ab, die in den hinter der Klinge liegenden Raum des Kübels fällt. Diese Baumaschinen dienen also dem schnellen Abtrag von Bodenschichten, da sie sich sehr schnell bewegen und selbst befüllen. Auch kann es sich um "Grader" handeln, bei denen lediglich eine Klinge die sogenannte "Schar" als Werkzeug am Werkzeugträger befestigt ist, wie in EP 0 233 367 A beschrieben. Diese Klinge wird über den anstehenden Boden gezogen und erzeugt so gewünschte Oberflächenneigungen. Weiterhin können auch Walzen etwa zur Bodenverdichtung oder Ähnliches als Werkzeug am Werkzeugträger angebracht sein.

Alle diese Baumaschinen werden in der Regel von wenigstens einem Motor angetrieben, der wiederum zumindest eine Fahrwerksachse antreibt. Üblich sind aber auch Allrad-getriebene Ausführungsvarianten dieser Baumaschinen, bei denen sowohl die erste am Motorträger befindliche Fahrwerksachse, wie auch die am Werkzeugträger befindliche zweite Fahrwerksachse angetrieben werden. Auch können jeweils mehrere Achsen sowohl am Motor- wie auch am Werkzeugträger vorhanden sein.

Diesen mit Gelenk-Fahrgestellen ausgerüsteten Baumaschinen, ist gemeinsam, dass es sich um relativ große und meist nur mit Hilfe von Tiefladern zu transportierende Geräte handelt. Aufgrund ihrer außergewöhnlichen Größe ist es daher in der Regel notwendig, Spezialtieflader für den Transport vorzuhalten oder sogar behördliche Sondergenehmigungen für den Transport dieser Baumaschinen einzuholen. Daher ist der Transport dieser bekannten Baumaschinen mit Gelenk-Fahrgestellen in der Regel äußerst aufwendig, teuer und zeitraubend.

Auf der anderen Seite müssen diese Geräte gut und auch sicher bedienbar sein, so dass die Maschinen in der Regel relativ große und zum Überrollschutz massiv verstärkte Fahrerkabinen aufweisen, die im Widerspruch zu einer möglichst kompakten Bauform für die Transportzwecke stehen.

Der Erfindung lieg daher die **Aufgabe** zugrunde, eine Baumaschine der oben stehend genannten Art anzugeben, die einfach und schnell transportiert werden kann und zugleich eine verbesserte Bedienbarkeit bei erhöhter Betriebssicherheit für das Bedienungspersonal ermöglicht.

Die Lösung dieser Aufgabe gelingt mit einer Baumaschine gemäß Anspruch 1. Bevorzugte Weiterbildungen dieser erfindungsgemäßen Baumaschine sind in den Unteransprüchen beschrieben.

Die erfindungsgemäße Baumaschine unterscheidet sich also von den eingangs genannten Baumaschinen darin, dass die Fahrerkabine am Werkzeugträger verschieblich so angebracht ist, dass sie entlang der Längsachse des Werkzeugträgers verschoben und dabei in ihrer Höhenlage so verändert werden kann, dass sie zum Betrieb der Baumaschine in eine Arbeitsposition angehoben und zum Transport in eine Transportposition abgesenkt werden kann. Die Längsachse des Werkzeugträgers erstreckt sich dabei orthogonal zur zweiten Fahrwerksachse etwa durch deren Mitte hin zum Gelenk zwischen Werkzeugträger und Motorträger.

Aufgrund der verschieblichen Lagerung der Fahrerkabine hat der Fahrer beim Betrieb der Baumaschine in der gegenüber herkömmlichen Baumaschinen vorzugsweise nochmals erhöhteren Arbeitsposition eine sehr gute Sicht auf die Baumaschine und auch das am Werkzeugträger befindliche Werkzeug. Soll die Baumaschine transportiert werden, kann die Fahrerkabine nun erfindungsgemäß zwischen Motor und Werkzeugträger so abgesenkt werden, dass sich die Bauhöhe der Baumaschine deutlich reduziert.

Die Höhenreduktion kann sich dabei im Bereich von etwa 1 m oder sogar deutlich mehr bewegen. Daher ist für den Transport der erfindungsgemäßen Baumaschine trotz ihrer großen Abmessungen kein tiefgehender Spezialtieflader notwendig und es entfallen auch die zeitraubenden, behördlichen Sondergenehmigungen für den Transport der erfindungsgemäßen Baumaschine. Der Transport ist also insgesamt schneller und kostengünstiger, selbst wenn die Bedienbarkeit des Gerätes durch eine nochmals erhöhter angeordnete Fahrerkabine im Betriebszustand verbessert wurde.

Um eine besonders große Bauhöhenreduktion für den Transport zu erreichen, ist es zweckmäßig die Fahrerkabine möglichst weit in den Zwischenraum zwischen Motor und Werkzeugträger in eine für den Betrieb der Baumaschine ungeeignete Transportposition abzusenken. Dann ist die Sicht aus der Fahrerkabine durch Motor und/ Werkzeug- bzw. Werkzeugträger beeinträchtig, aber es wird der größtmögliche Staueffekt erzielt. Dies ist besonders bei Baumaschinen sinnvoll, die nicht selbst im öffentlichen Straßenverkehr zu ihrem Einsatzort fahren sollen, sondern die mittels Tiefladern dorthin transportiert werden.

In einer bevorzugten Weiterbildung der Baumaschine befindet sich die Fahrerkabine in ihrer Arbeitsposition zumindest teilweise über einem Werkzeug, das am Werkzeugträger angebracht ist. Die Vorrichtungen zur verschieblichen Lagerung der Kabine werden also mit anderen Worten sehr weit nach hinten geführt. Diese Anordnung am Werkzeugträger steht im Gegensatz zur bisher allgemein üblichen Montage der Kabine am Motorträger bzw. Motor oder dessen Motorblock. Diese geänderte Lage hat aber den Vorteil, dass sich der Fahrer der Baumaschine im Wesentlichen sehr dicht am Werkzeug befindet, so dass er durch sein auf seinen eigenen Körper bezogenes Körpergefühl die Baumaschine gut manövrieren kann, ohne dass er dazu auf das Werkzeug schauen muss. Dieser Effekt wird durch die über das Werkzeug nochmals weiter nach hinten verlagerte Position der Kabine zusätzlich verstärkt.

In einer weiteren besonders bevorzugten Weiterbildung der erfindungsgemäßen Baumaschine kann die Fahrerkabine am Geräteträger entlang verschoben werden. Dies hat den Vorteil, dass der Geräteträger als Führung für die Verschiebebewegung der Fahrerkabine benutzt werden kann. Dabei ist es besonders von Vorteil, wenn zur Führung der Fahrerkabine wenigstens eine Führungsschiene am Geräteträger angeordnet ist. Zweckmäßig befinden sich aber an jeder Seite des Trägers eine Führungsschiene, da so ein Verdrehen der Kabine auf dem Träger gut verhindert werden kann.

Weiterbildend wird die Transportposition der Fahrerkabine so gewählt, dass die Fahrerkabine so zwischen Motor und Werkzeugträger abgesenkt ist, dass sie diese zumindest im Wesentlichen in der Höhe nicht überragt. Damit reduziert sich die Bauhöhe der Baumaschine deutlich, so dass, wie bereits erwähnt, keine Spezialtieflader für den Transport der Baumaschine mehr erforderlich sind.

Besonders zweckmäßig ist es dabei, dass die Fahrerkabine in der Transportposition möglichst dicht am Motor angeordnet ist. Die am Geräteträger befestigte Fahrerkabine wird also so dicht an den Motor herangeschoben und abgesenkt, dass sich möglichst kleine Freiräume zwischen Motor und Kabine übrig bleiben. Auch kann es dabei zweckmäßig sein, dass die Fahrerkabine dazu zumindest teilweise über das Gelenk zwischen Motorträger und Werkzeugträger geschoben wird, denn auch dies spart Platz.

Besonders vorteilhaft ist es, wenn der Geräteträger brückenartig gebogen ausgebildet ist. Dabei kann der Geräteträger schräge aber gerade Seitenwangen und eine gerade Verbindung zwischen diesen Wangen aufweisen oder selbst durchgängig oder nur bereichsweise weise gekrümmt bzw. gebogen sein. Jedenfalls gibt der Geräteträger selbst die Verschieberichtung der Fahrerkabine vor. In der Seitenansicht der Baumaschine wirkt dies dann so, als würde sich eine Mulde zwischen den hügelartigen Erhebungen des Werkzeugträgers und des Motors ergeben, in die die Fahrerkabine abgesenkt werden kann.

Zweckmäßigerweise sind zumindest einige der in der Fahrerkabine angeordneten Bedienelemente in der Transportposition der Fahrerkabine abgeschaltet. Das dient der Betriebssicherheit der Baumaschine, da so ein versehentliches Verschwenken beispielsweise der Baumaschine um ihr Gelenk-Fahrgestell vermieden werden kann.

Besonders bevorzugt wird die Fahrerkabine durch einen hydraulischen Antrieb verschoben. Dieser kann zum Beispiel aus einem oder mehreren Hydraulikzylindern bestehen, der oder die die Fahrerkabine entweder in ihre Arbeitsposition schieben bzw. ziehen. Zweckmäßiger Weise ist der Antrieb am Geräteträger angebaut, um Platz zu sparen.

Besonders zweckmäßig ist die Fahrerkabine zumindest in der Arbeitsposition und/oder der Transportposition festlegbar. In der Arbeitsposition ist das Festlegen der Fahrerkabine zumindest dann vorteilhaft, wenn beispielsweise durch einen Ausfall der hydraulischen Systeme ein Abrutschen der Fahrerkabine zu befürchten wäre. Aber auch das Festlegen der Fahrerkabine in der Transportposition kann zweckmäßig sein, da so unnötige Belastungen der Fahrerkabine durch Hin- und Herrutschen beim Transport vermieden werden. Besonders vorteilhaft aber ist es, wenn die Fahrerkabine in jeder gewünschten Position festlegbar ist. So kann die Kabinenposition flexibel jedem Wunsch und jeder Einsatzsituation angepasst werden.

Daher wird bevorzugt eine hydraulische Verriegelung zum Festlegen der Fahrerkabine verwendet. Diese hat den Vorteil, dass die Fahrerkabine in jeder gewünschten Position festgelegt werden kann und keine mechanischen Sperrglieder etwa per Hand bedient werden müssen. Es handelt sich hierbei bevorzugt um eine spielfreie Sicherung der Kabine in der jeweiligen Position mittels hydraulischem Sperrblock und einer Membran, wie etwa einem Schlauch.

Zur Verbesserung der Unfallsicherheit der Baumaschine weist die Fahrerkabine einen Überrollbügel auf. Dieser schützt den Fahrer vor herabfallenden Gegenständen oder bei einem Überschlag der Baumaschine. Besonders zweckmäßig ist es aber, wenn zusätzlich zu diesem in der Fahrerkabine angeordneten Überrollschutz die Verriegelung der Fahrerkabine bei einem Unfall gelöst wird. Dabei kann der Unfall darin bestehen, dass ein Gegenstand auf die Fahrerkabine fällt oder dass die Baumaschine umkippt und sich überschlägt. Wird in so einer Situation die Verriegelung der Fahrerkabine gelöst, kann diese sich zwischen Motor und Werkzeugträger schieben oder geschoben werden, so dass der Aufprall durch das Zurückweichen der Fahrerkabine abgefangen oder gedämpft wird.

Besonders vorteilhaft ist es aber, wenn Motor und Werkzeugrahmen einen Schutzraum bilden, in den die Fahrerkabine bei einem Unfall abgesenkt werden kann. Dann ist die Transportposition auch zugleich eine Schutzposition. Hierbei wirken der Motor und insbesondere sein Motorblock zusammen mit dem in der Regel sehr massiv ausgeführten Werkzeugrahmen als Aufprallschutz für die Fahrerkabine, da sich diese zwischen den beiden stabilen Bauteilen in ihre Transportposition absenken kann. Dadurch fangen Motor und Werkzeugrahmen die sonst üblicherweise auf eine vorstehende Fahrerkabine wirkenden Kräfte ab und diese wird kaum oder gar nicht verformt. Die Verformungen der Fahrerkabine sind natürlich dann besonders gering, wenn sie nicht über eine gedachte Verbindungslinie von Motor und Werkzeugrahmen übersteht, dies also höher ist als die Kabine. Doch selbst wenn die Fahrerkabine über diese Bauteile übersteht, führt dies in der Regel dann nicht zu gravierenden Verletzungen des Fahrers, wenn der zwischen Motor und Werkzeugträger gebildete Schutzraum genügend groß ist, um einem Menschen Platz zu bieten.

Die Ermittlung einer Unfallsituation kann dabei zum Beispiel durch Sensoren, die das Umkippen der Maschine ermitteln oder durch Sensoren die eine Krafteinwirkung auf die Fahrerkabine ermitteln, in Zusammenarbeit mit einem Sicherheitsüberwachungssystem erkannt werden. Denkbar ist aber auch, dass sich die Fahrerkabine bei einem Überschreiten eines bestimmten Haltedrucks im hydraulischen Verriegelungssystem selbsttätig absenkt. Ein solcher erhöhter Verriegelungsdruck wäre beispielsweise dann gegeben, wenn ein schwerer Gegenstand, wie etwa ein Felsbrocken, auf die Fahrerkabine drückt und somit eine starke Druckerhöhung im hydraulischen Verriegelungssystem erzeugt. Wird dann ein Schwellenwert überschritten, rutscht die Fahrerkabine nach unten. Sie gibt also der Aufprallkraft nach und dämpft diesen ab.

Im Folgenden soll die Erfindung anhand der in den Zeichnungen dargestellten Ausführungsbeispiele näher erläutert werden. Es zeigen schematisch:
- Fig. 1:: Eine Seitenansicht auf eine erfindungsgemäße Baumaschine, deren Fahrerkabine sich in einer erhöhten Arbeitsposition befindet;
- Fig. 2:: Eine Seitenansicht der Fig. 1 gezeigten Maschine, deren Fahrerkabine sich in einer abgesenkten Transportposition befindet;
- Fig. 3:: Eine vergrößerte Darstellung der in Fig. 1 gezeigten Fahrerkabine;
- Fig. 4:: Eine vergrößerte Darstellung der in Fig. 2 gezeigten Fahrerkabine;
- Fig. 5:: Eine räumliche Darstellung der in Fig. 1 gezeigten Fahrerkabine schräg von vorne und
- Fig. 6:: Eine räumliche Darstellung der in Fig. 1 gezeigten Fahrerkabine schräg von hinten.

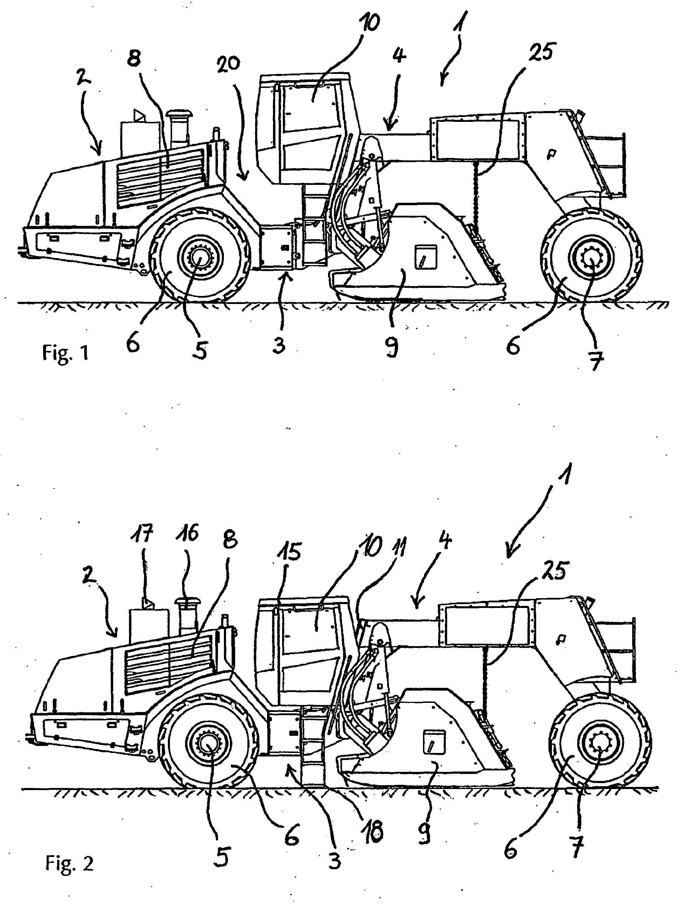

Bei der in Fig. 1 gezeigten Baumaschine 1 handelt es sich um einen Stabilisierer/Recycler. Dieser weist einen Motorträger 2, ein Gelenk 3 und einen Werkzeugträger 4 auf. Der Motorträger 2 hat wiederum eine erste Fahrwerksachse 5, die an ihren beiden Enden jeweils mit einem Rad 6 bestückt ist, und der Werkzeugträger 4 weist eine zweite Fahrwerksachse 7 auf, die ebenfalls mit zwei Rädern 6 an ihren Enden bestückt ist. Somit bilden der Motorträger 2 und der über das Gelenk 3 mit diesem verbundene Werkzeugträger 4 ein Gelenk-Fahrgestell.

Der Motorträger 2 trägt einen Motor 8, der in dem hier gezeigten Ausführungsbeispiel sowohl die erste Fahrwerksachse 5 des Motorträgers 2 wie auch die zweite Fahrwerksachse 7 des Werkzeugträgers 4 antreibt. Es handelt sich also um ein allradgetriebenes Fahrzeug.

Der Werkzeugträger 4 ist brückenartig wie ein umgedrehtes sich öffnendes U ausgeführt. An ihm ist an den Aufhängungen 24 und 25 ein Werkzeug 9 angebracht, bei dem es sich um ein übliches Werkzeug zur Bodenstabilisierung handelt, das auch zum Straßenrecycling geeignet ist. Diese an sich bekannten Werkzeuge haben in der Regel in einem Gehäuse eine auf den Boden einwirkende rotierende Fräswalze, wobei in dem durch das Gehäuse gebildeten Mischraum verschiedene Systeme zur Eindüsung von Bitumen Wasser oder anderen Wirkstoffen angeordnet sind. Die Längsachse des Werkzeugträgers 4 verläuft quer und mittig zu der zweiten Fahrwerksachse 7 durch das Gelenk 3 hindurch.

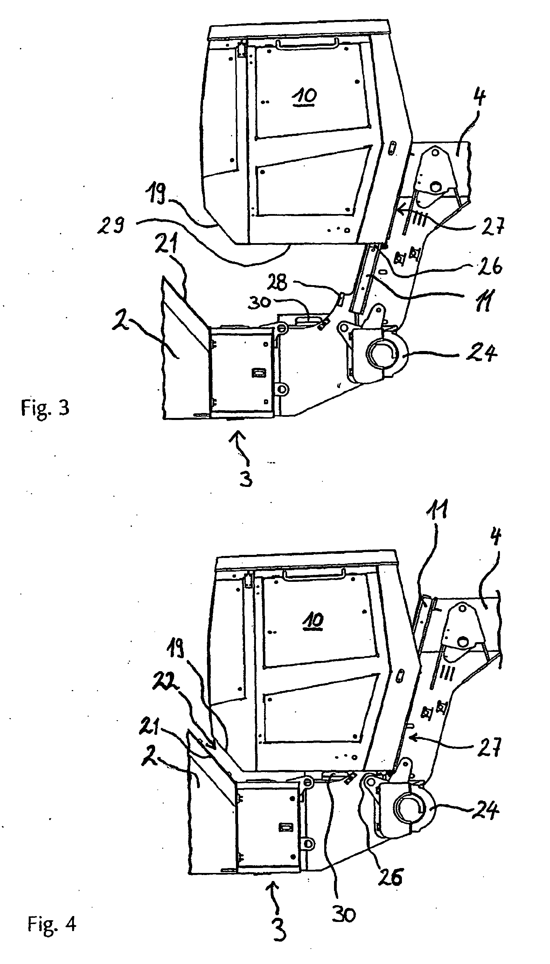

Zwischen Motor 8 und dem Werkzeugträger 4 befindet sich eine Fahrerkabine 10. Diese ist wie man auch in Figuren 3 bis 6 erkennen kann, am Werkzeugträger 4 verschieblich so angebracht, dass die Kabine 10 entlang der Längsachse des Geräteträgers 4 verschoben und dabei in ihrer Höhenlage verändert werden kann. In dem in Fig. 1 gezeigten Fall befindet sich die Fahrerkabine 10 in ihrer erhöhten Arbeitsposition, während sie in der Fig. 2 gezeigten Situation in die abgesenkte Transportposition geschoben worden ist.

Die verschiebliche Lagerung wird durch zwei parallele und auf beiden Seiten des Werkzeugträgers 4 angeschweißte Führungsschienen 11 und 12, in denen die Fahrerkabine 10 hin und her verschoben werden kann, erzielt. Bei diesen beiden Führungsschienen 11 und 12 handelt es sich um zwei U-Profile aus Stahl, die jeweils mit ihrem Rücken an den Seitenwangen des Werkzeugträger 4 befestigt, hier geschweißt, sind, so dass sich in den Profilen 11, 12 rechteckige Gleitschuhe 26 hin und her bewegen können. Die Schenkel der Führungsschienen 11, 12 stehen mit anderen Worten nach außen ab. Die Führungsschienen 11 und 12 sind beide gleichlang und parallel zur Längsachse des Werkzeugträgers 4 nach hinten zum hinteren Fahrzeugende der Baumaschine 1 geneigt. Dieses Fahrzeugende befindet sich in Fig. 1 rechts. Im vorliegenden Fall verlaufen die Führungsschienen 11, 12 zudem parallel zur Stirnseite des Werkzeugträgers 4 und direkt entlang den von den Seitenwangen und der Stirnseite gebildeten vorderen Kanten des Werkzeugträgers 4.

Die beiden Führungsschienen 11, 12 sind erfindungsgemäß so angebracht, dass sie nicht über die größte Bauhöhe der Baumaschine 1 vorstehen. Dies ist hier der höchste Punkt des Werkzeugträgers 4 an dessen hinterem Ende und der Auspuff 17 sowie der Lüfter 16 des Motors 8. Somit ergibt sich die Begrenzung der maximalen Höhenverschiebung der Fahrerkabine 10 aus der Bauhöhe eines Bauteils des Stabilisators 1, dessen maximale Höhe nicht oder nur mit unverhältnismäßigem Aufwand verändert werden kann. Dies muss nicht zwangsweise der Auspuff 17, der Lüfter 16 oder der Werkzeugträger 4 sein, da es denkbar ist, dass diese auch versenk- oder umklappbar ausgeführt sind. In den meisten Fällen wird es aber der Werkzeugträger 4 oder die Fahrerkabine 10 sein, die eine solche Höhenbegrenzung definieren. Vorliegend ist die Fahrerkabine 10 sogar insgesamt höher als die Führungsschienen 11, 12 lang sind.

Die Gleitschuhe 26 sind an der Rückwand 27 der Fahrerkabine 10 befestigt und sind in den Figuren 3 und 4 am unteren rechten Rand der Kabine 10 gerade noch zu erkennen, da sie zum größten Teil verdeckt sind. Die Rückwand 27 der Fahrerkabine 10 ist an ihrem unteren Teil etwa U-förmig eingebaucht, um zumindest den Bereich des Werkzeugträgers 4 zu umschließen, in dem die Führungsschienen 11, 12 angebracht sind. Die Rückwand 27 umgreift also mit anderen Worten den Werkzeugträger 4 wie hier gezeigt zumindest teilweise. An den sich gegenüberliegenden Schenkeln der U-förmigen Wand 27 ist jeweils ein länglicher Gleitschuh 26 angeschraubt, der jeweils in einer der Führungsschienen 11, 12 geführt wird. Somit verhindern die beiden gegenüberliegenden parallelen Gleitschuhe 26 ein Herausspringen aus den Führungsschienen 11, 12 und zusammen mit ihnen ein Verdrehen der Fahrerkabine 10 um den Werkzeugrahmen 4. An dieser Stelle sei angemerkt, dass nicht nur ein sondern auch zwei, drei oder mehr Gleitschuhe 26 pro Führungsschiene 11, 12 angeordnet werden können, etwa um die Reibung zu verringern.

Da die Führungsschienen 11, 12 parallel zum sich öffnenden Schenkel des U-förmigen Werkzeugrahmens 4 verlaufen, ist der untere Teil der Rückwand 27 an dem die Kabine befestigt ist, dem Neigungswinkel des Werkzeugträger-Schenkels entsprechend nach hinten geneigt. Der Winkel zwischen dem Boden 29 der Fahrerkabine 10 und der Rückwand 27 ist also größer als 90 °, so dass der Boden 29 möglichst parallel zur Ebene der Fahrzeugachsen 5 und 7,verläuft. Vorliegend ist nur etwa die untere Hälfte der Rückwand 27 so abgeschrägt und kann zur Befestigung der Fahrerkabine 10 herangezogen werden, um die Breite der Fahrerkabine 10 nicht zu groß werden zu lassen.

Die Fahrerkabine 10 wird beim dem hier gezeigten Ausführungsbeispiels mittels zweier Hydraulikzylinder 13 und 14 in die jeweils gewünschte Position verschoben. Diese Hydraulikzylinder 13, 14 werden vom hydraulischen Antriebssystem des Stabilisierers/Recyclers 1 versorgt. Die Hydraulikzylinder 13, 14 sind dabei jeweils parallel zu den Führungsschienen 11 und 12 am Werkzeugträger 4 angebracht und über Anlenkbleche 14 mit der Rückwand 27 der Fahrerkabine 10 verbunden. In dem hier gezeigten Ausführungsbeispiel ziehen die beiden Hydraulikzylinder 13 und 14 die Fahrerkabine 10 in die Arbeitsposition schräg nach oben während sie bei nachlassendem hydraulischen Druck die Fahrerkabine 10 in die Fig. 2 bzw. Fig. 4 gezeigte Transportposition schräg in Arbeitsrichtung der Maschine nach vorne in Richtung des Motor 8 hinuntergleiten lassen. Die Lage der oberen Befestigungspunkte der Hydraulikzylinder 13 und 14 ergibt sich ebenfalls wie die Begrenzung der maximalen Höhenverschiebung der Fahrerkabine 10 aus der maximal erwünschten Bauhöhe der Baumaschine 1 in ihrer Transportkonfiguration und muss jedenfalls unterhalb des höchsten Punktes der Baumaschine 1 liegen, der diese Höhe vorgibt.

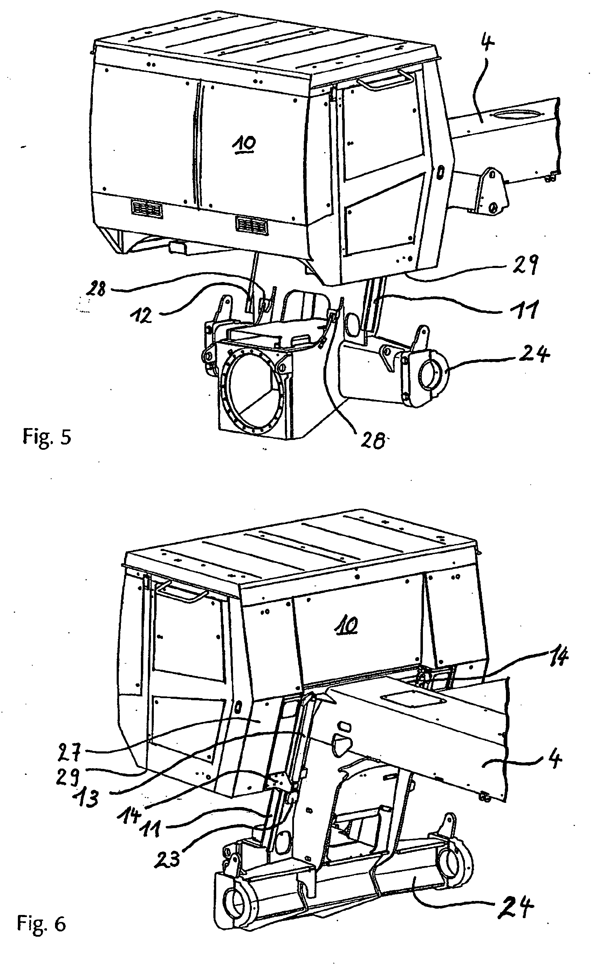

Um die Fahrerkabine 10 in der jeweils gewünschten Position zu halten, ist eine hydraulische Verriegelung vorgesehen. Dazu ist jedem Hydraulikzylinder 13, 14 jeweils ein hydraulischer Sperrblock 23 zugeordnet. Die Sperrblöcke 23 befinden sich dabei am unteren Ende jedes Hydraulikzylinders 13, 14 wie in Fig. 6 gezeigt ist.

Damit die Fahrerkabine 10 beim Ablassen in die Transportposition keinen Schaden am Werkzeugträger 4 nimmt oder gar einen Schaden am Gelenk 3 verursacht, sind zwei am Werkzeugträger 4 angeschweißte Anschläge 28 aus Stahl vorgesehen, die so gegenüber dem Gelenk 3 erhöht sind, dass sie einen Aufprall des Bodens 29 der Fahrerkabine 10 auf das Gelenk 3 verhindern. Außerdem ist am Werkzeugträger 4 ein Gummipuffer 30 zur Dämpfung des Aufpralls vorgesehen.

Bei dem hier gezeigten Bodenstabilisator 1 ist die Fahrerkabine 10 so angeordnet, dass sie entgegen der Fahrtrichtung der Maschine schräg nach hinten am Werkzeugträger 4 entlang über das daran angebrachte Werkzeug 9 gezogen wird. Dies hat den Vorteil, dass der in der Kabine 10 befindliche Fahrer anhand der Lage seines eigenen Körperschwerpunkts sehr gut die Lage des Werkzeuges 9 beurteilen kann, ohne dafür extra nach unten schauen zu müssen. Gleichzeitig verbessert sich die Rundumsicht aus der Kabine und insbesondere die Sicht auf das vor der Maschine 1 liegende Umfeld durch die erhöhte Arbeitsposition deutlich. Außerdem ist durch das nach hinten Verschieben der Fahrerkabine 10 in die Arbeitsposition der Abstand ihrer Vorderseite zum Motor 8 so vergrößert, dass Werkzeugträger 4 und Motorträger 2 im Einsatz problemlos gegeneinander im Gelenk 3 verschwenkt werden können, ohne dass die Fahrerkabine 10 diese Verschwenkung behindert.

Soll der erfindungsgemäße Bodenstabilisator/Recycler 1 von einem Einsatzort zu einem anderen transportiert werden, so wird die Fahrerkabine 10 in die Baumaschine hinein einfach in die abgesenkte Transportposition, wie in Fig. 2 gezeigt, verschoben. Dann schließt das Dach 15 der Fahrerkabine 10 mit einer gedachten und durch die Lüfterhaube 16, dem Auspuff 17 als den höchsten Punkten des Motors 8 sowie dem höchstem Punkt des Werkzeugträgers 4 am hinteren Fahrzeugende verlaufenden Verbindungslinie bündig ab. Somit ist die Baumaschine 1 in ihrer Höhe auf ein absolutes Mindestmaß beim Transport zusammengeschoben und es bedarf nunmehr keiner Spezialtieflader um sie zu transportieren.

Dabei ist der Zwischenraum zwischen Motor 8 und Werkzugträger 4 möglichst gering gewählt, um die Baulänge des Recyclers 1 nicht unnötig zu verlängern. Dazu ist die Fahrerkabine 10 an ihrer unteren Vorderseite 19 so angeschrägt, dass sie sich in etwa der Querschnittserweiterung 21 des Motorträgers 2 anpasst. So ist es möglich, die Fahrerkabine 10 sehr dicht an den Motorträger 2 und den darauf befestigten Motor 8 heranzufahren. Es entsteht also nur ein sehr geringer Spalt 22 zwischen der unten angeschrägten Vorderseite 19 der Fahrerkabine 10 und der Oberseite 21 des Motorträgers 2, wie man auch der Fig. 4 entnehmen kann. Damit es nun nicht zu Beschädigungen der Fahrerkabine 10 bzw. der Baumaschine 1 etwa durch ein unbeabsichtigtes Verschwenken des Werkzeugträgers 4 um das Gelenk 3 kommt, werden zumindest die Bedienelemente des in der Fahrerkabine 10 befindlichen Steuerstandes abgeschaltet, die die Lenkung und den Fahrantrieb der Baumaschine 1 betreffen. Allerdings bleibt zumindest das Bedienelement betriebsbereit, das zum Hochfahren der Fahrerkabine 10 in die Arbeitsposition benötigt wird.

Wie man auch der Fig. 2 gut entnehmen kann, hat die absenkbare Fahrerkabine 10 auch den zusätzlichen Vorteil, dass der Einstieg für den Fahrer in die Fahrerkabine 10 erleichtert wird, da in der Fig. 2 gezeigten Transportposition die Leiter 18 zum Einstieg in die Fahrerkabine bereits bis zum Boden reicht, während sie in der Fig. 1 gezeigten Arbeitsposition nicht bis dahin reicht.

Besonders vorteilhaft an dieser Erfindung ist, dass das Verschieben der Fahrerkabine 10 entlang des Werkzeugträgers 4 schräg nach hinten nicht nur die Übersichtlichkeit und den Transport der Baumaschine verbessert, sondern dass sich auch die Sicherheit des in der Kabine 10 befindlichen Fahrers des Stabilisators/Recyclers 1 deutlich erhöht. So hat die Fahrerkabine 10 einen im Inneren befindlichen Überrollbügel, der einen Aufprall- und Überrollschutz bietet, aber vor allem kann sich die Fahrerkabine 10 bei einer entsprechenden Unfallsituation in einem zwischen dem Motor 8 und dem Werkzeugträger 4 gebildeten Sicherheitsraum 20 verschieben. Dieser Sicherheitsraum 20 dient in der normalen Transportsituation der Aufnahme der Fahrerkabine 10. In einer Unfallsituation, beispielsweise wenn sich die Baumaschine 1 überschlägt, ist er aber der Überlebensraum für den Fahrer, da der massive Motorblock des Motors 8 und der massive Werkzeugträger 4 den Stoß bzw. Aufprall auf die Kabine 10 weitestgehend abfangen.

## Patentansprüche

1. Baumaschine (1) bei der ein Motorträger (2) über ein Gelenk (3) mit einem Werkzeugträger (4) zu einem Gelenk-Fahrgestell verbunden ist, wobei der Motorträger (2) wenigstens eine erste Fahrwerksachse (5) und einen Motor (8) zum Fahrantrieb der Baumaschine (1) aufweist und der Werkzeugträger (4) wenigstens eine zweite Fahrwerksachse (7) aufweist und die eine zwischen Motor (8) und Werkzeugträger (4) angeordnete Fahrerkabine (10) hat,
**dadurch gekennzeichnet,**
**dass** die Fahrerkabine (10) am Werkzeugträger (4) verschieblich so angebracht ist, dass sie entlang der Längsachse des Werkzeugträgers (4) verschoben und dabei in ihrer Höhenlage so verändert werden kann, dass sie zum Betrieb der Baumaschine (1) in eine Arbeitsposition angehoben und zum Transport der Baumaschine (1) in eine Transportposition abgesenkt werden kann.

2. Baumaschine nach Anspruch 1,
**dadurch gekennzeichnet,**
**dass** sich die Fahrerkabine (10) in ihrer Arbeitsposition zumindest teilweise über einem Werkzeug (9) befindet, das am Werkzeugträger (4) angebracht ist.

3. Baumaschine nach Anspruch 1 oder 2,
**dadurch gekennzeichnet,**
**dass** die Fahrerkabine (10) am Werkzeugträger (4) entlang verschoben werden kann.

4. Baumaschine nach einem der vorhergehenden Ansprüche,
**dadurch gekennzeichnet,**
**dass** wenigstens eine Führungsschiene (11, 12) zur Führung der Fahrerkabine (10) am Werkzeugträger (4) angeordnet ist.

5. Baumaschine nach einem der vorhergehenden Ansprüche,
**dadurch gekennzeichnet,**
**dass** die Fahrerkabine (10) in der Transportposition so zwischen Motor (8) und Werkzeugträger (4) abgesenkt ist, dass sie diese zumindest im Wesentlichen nicht in der Höhe überragt.

6. Baumaschine nach einem der vorhergehenden Ansprüche,
**dadurch gekennzeichnet,**
**dass** die Fahrerkabine (10) in der Transportposition möglichst dicht am Motor (8) angeordnet ist.

7. Baumaschine nach einem der vorhergehenden Ansprüche,
**dadurch gekennzeichnet,**
**dass** die Fahrerkabine (10) zumindest teilweise über das Gelenk (3) zwischen Motorträger (2) und Werkzeugträger (4) geschoben werden kann.

8. Baumaschine nach einem der vorhergehenden Ansprüche,
**dadurch gekennzeichnet,**
**dass** der Werkzeugträger (4) brückenartig gebogen ausgebildet ist.

9. Baumaschine nach einem der vorhergehenden Ansprüche,
**dadurch gekennzeichnet,**
**dass** zumindest einige der in der Fahrerkabine (10) angeordneten Bedienelemente in der Transportposition der Fahrerkabine (10) abgeschaltet sind.

10. Baumaschine nach einem der vorhergehenden Ansprüche,
**dadurch gekennzeichnet,**
**dass** die Fahrerkabine (10) durch einen hydraulischen Antrieb (13, 14) verschoben werden kann.

11. Baumaschine nach einem der vorhergehenden Ansprüche,
**dadurch gekennzeichnet,**
**dass** die Fahrerkabine (10) zumindest in der Arbeitsposition und/oder der Transportposition festlegbar ist.

12. Baumaschine nach einem der vorhergehenden Ansprüche,
**dadurch gekennzeichnet,**
**dass** die Fahrerkabine (10) mit einer hydraulischen Verriegelung (23) festgelegt werden kann.

13. Baumaschine nach einem der vorhergehenden Ansprüche,
**dadurch gekennzeichnet,**
**dass** die Fahrerkabine (10) einen Überrollbügel aufweist.

14. Baumaschine nach Anspruch 12,
**dadurch gekennzeichnet,**
**dass** die Verriegelung der Fahrerkabine (10) bei einem Unfall gelöst wird.

15. Baumaschine nach einem der vorhergehenden Ansprüche,
**dadurch gekennzeichnet,**
**dass** Motor (8) und Werkzeugrahmen (4) einen Schutzraum (20) bilden, in den die Fahrerkabine (10) bei einem Unfall abgesenkt werden kann.

## Claims

1. Construction machine (1) in which an engine carrier (2) is connected to a tool carrier (4) via a joint (3) to form an articulated running gear, the engine carrier (2) having at least a first chassis axle (5) and an engine (8) for driving the construction machine (1) and the tool carrier (4) having at least a second chassis axle (7), and which has a driver's cab (10) arranged between the engine (8) and tool carrier (4), **characterised in that** the driver's cab (10) is attached displaceable to the tool carrier (4) in such a way that it can be displaced along the longitudinal axis of the tool carrier (4) and can thus be varied in its height position in such a way that it can be raised, for operating the construction machine (1), into a working position and lowered, for transporting the construction machine (1), into a transportation position.

2. Construction machine according to claim 1, **characterised in that** the driver's cab (10) is located, in its working position, at least partially above a tool (9) attached to the tool carrier (4).

3. Construction machine according to either claim 1 or claim 2, **characterised in that** the driver's cab (10) can be displaced along the tool carrier (4).

4. Construction machine according to any one of the preceding claims, **characterised in that** at least one guide rail (11, 12) for guiding the driver's cab (10) is arranged on the tool carrier (4).

5. Construction machine according to any one of the preceding claims, **characterised in that** the driver's cab (10) is lowered, in the transportation position, between the engine (8) and tool carrier (4) in such a way that it at least substantially does not tower above them.

6. Construction machine according to any one of the preceding claims, **characterised in that** the driver's cab (10) is arranged, in the transportation position, as close as possible to the engine (8).

7. Construction machine according to any one of the preceding claims, **characterised in that** the driver's cab (10) can be slid, at least partially via the joint (3), between the engine carrier (2) and tool carrier (4).

8. Construction machine according to any one of the preceding claims, **characterised in that** the tool carrier (4) is bent in a bridge-like manner.

9. Construction machine according to any one of the preceding claims, **characterised in that** at least some of the operating elements arranged in the driver's cab (10) are switched off in the transportation position of the driver's cab (10).

10. Construction machine according to any one of the preceding claims, **characterised in that** the driver's cab (10) can be displaced by a hydraulic drive (13, 14).

11. Construction machine according to any one of the preceding claims, **characterised in that** the driver's cab (10) can be secured at least in the working position and/or the transportation position.

12. Construction machine according to any one of the preceding claims, **characterised in that** the driver's cab (10) can be secured using a hydraulic locking means (23).

13. Construction machine according to any one of the preceding claims, **characterised in that** the driver's cab (10) has a roll-over bar.

14. Construction machine according to any one of the preceding claims, **characterised in that** the locking means of the driver's cab (10) is detached in the event of an accident.

15. Construction machine according to any one of the preceding claims, **characterised in that** the engine (8) and tool frame (4) form a protective chamber (20) into which the driver's cab (10) can be lowered in the event of an accident.

## Revendications

1. Engin de chantier (1) pour lequel un engin porteur motorisé (2) est relié par une articulation (3) à un porte-outil (4) à un châssis articulé, ledit engin porteur motorisé (2) présentant au moins un essieu (5) et un moteur (8) pour mobiliser l'engin de chantier (1) et le porte outil (4) présente au moins un second essieu (7) et ayant une cabine du conducteur (10) disposée entre le moteur (8) et le porte outil (4), **caractérisé en ce que**
la cabine du conducteur (10) est fixée déplaçable au porte-outil (4), de telle façon qu'elle puisse coulisser le long l'axe longitudinal du porte-outils (4) et ainsi sa position en hauteur être modifiée, de manière que lors de l'utilisation de l'engin de chantier (1) elle puisse être élevée dans une position de travail et que pour le transport l'engin de chantier (1) puisse être abaissé dans une position de transport.

2. Engin de chantier selon la revendication 1, **caractérisé en ce que** la cabine du conducteur (10) dans sa position de travail se trouve au moins en partie au-dessus d'un outil (9) lequel est fixé au porte-outil (4).

3. Engin de chantier selon la revendication 1 ou 2 **caractérisé en ce qu'**on peut faire coulisser la cabine du conducteur (10) le long du porte-outil (4).

4. Engin de chantier selon une des revendications précédentes, **caractérisé en ce qu'**au moins un rail de guidage (11, 12) de la cabine du conducteur (10) est disposé sur le porte-outil (4).

5. Engin de chantier selon une des revendications précédentes, **caractérisé en ce que** la cabine du conducteur (10) dans la position de transport est abaissée entre le moteur (8) et le porte-outil (4) de manière à ce que ladite cabine ne les dépasse, du moins pas essentiellement en hauteur.

6. Engin de chantier selon une des revendications précédentes, **caractérisé en ce que** dans la position de transport, la cabine du conducteur (10) soit disposée aussi près que possible du moteur (8).

7. Engin de chantier selon une des revendications précédentes, **caractérisé en ce que** la cabine du conducteur (10) puisse être glissée au moins en partie au dessus de l'articulation (3) entre l'engin porteur motorisé (2) et le porte outil (4).

8. Engin de chantier selon une des revendications précédentes, **caractérisé en ce que** le porte outil (4) est constitué arqué en forme de pont.

9. Engin de chantier selon une des revendications précédentes, **caractérisé en ce qu'**au moins quelques-uns des éléments de commande disposés dans la cabine du conducteur (10) soit débrancher lorsque la cabine du conducteur (10) est en position de transport.

10. Engin de chantier selon une des revendications précédentes, **caractérisé en ce qu'**on peut faire coulisser la cabine du conducteur (10) par un entraînement hydraulique (13, 14).

11. Engin de chantier selon une des revendications précédentes, **caractérisé en ce que** la cabine du conducteur (10) puisse être immobilisée au moins dans la position de travail et/ou la position de transport.

12. Engin de chantier selon une des revendications précédentes, **caractérisé en ce que** la cabine du conducteur (10) puisse être immobilisée par un verrouillage hydraulique (23).

13. Engin de chantier selon une des revendications précédentes, **caractérisé en ce que** la cabine du conducteur (10) présente un arceau de sécurité.

14. Engin de chantier, selon la revendication 12, **caractérisé en ce que** le verrouillage de la cabine du conducteur (10) se déclenche lors d'un accident.

15. Engin de chantier selon une des revendications précédentes, **caractérisé en ce que** le moteur (8) et le cadre porte-outil (4) constituent un cadre de protection (20) à l'intérieur duquel la cabine du conducteur (10) peut être abaissée lors d'un accident.
